## Europäisches Patentamt
## European Patent Office
## Office européen des brevets

(19)

(11) Veröffentlichungsnummer: **0 296 351**
**B1**

(12) **EUROPÄISCHE PATENTSCHRIFT**

(45) Veröffentlichungstag der Patentschrift:
05.09.90

(51) Int. Cl.⁵: **B61H 5/00**

(21) Anmeldenummer: 88107818.2

(22) Anmeldetag: 16.05.88

(54) Scheibenbremse für Schienenfahrzeuge.

(30) Priorität: 22.05.87 DE 3717303

(43) Veröffentlichungstag der Anmeldung:
28.12.88 Patentblatt 88/52

(45) Bekanntmachung des Hinweises auf die Patenterteilung:
05.09.90 Patentblatt 90/36

(84) Benannte Vertragsstaaten:
DE

(56) Entgegenhaltungen:
DE-A- 1 912 285
DE-A- 2 449 853
DE-B- 2 609 445
FR-A- 2 135 676
US-A- 2 242 050

(73) Patentinhaber: KNORR-BREMSE AG, Moosacher Strasse 80 Postfach 401060, D-8000 München 40(DE)

(72) Erfinder: Katzer, Ernst, Friedenspromenade 85, D-8000 München 82(DE)
Erfinder: Starck, Günter, Sonnenhang 20, D-8069 Ilmmünster(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Scheibenbremse für Schienenfahrzeuge, mit drei Bremsscheiben auf einer Radsatzwelle, wobei jeder Bremsscheibenseite das eine Bremsbacke tragende Ende eines an seinem mittleren und an seinem anderen Endbereich Lagerstellen zur Abstützung bzw. Bremskrafteinbzw.-Ableitung aufweisenden Bremshebels zugeordnet ist, wobei die Bremsbacken mittels Pendelhebel am Fahrzeug- bzw. Drehgestellrahmen aufgehängt und die Bremshebel an einem zur Radsatzwelle parallel verlaufenden, am Fahrzeug- bzw. Drehgestell gehaltenen Träger gehaltert bzw. geführt sind, und mit einem schwimmend gelagerten Bremszylinder, dessen Gehäuse und Kolbenstange an zwei Bremshebelenden angelenkt sind.

Eine derartige Scheibenbremse für zumindest zwei Bremsscheiben ist aus der DE-C 24 49 853 bekannt. Bei dieser bekannten Anordnung wurde besonderer Wert darauf gelegt, daß bei sich abnutzenden Bremsbelägen keine unnötig große Schrägstellung eines Bremszangenhebels auftritt, welche zu einer die Bremsleistung mindernden Unsymmetrie in der Geometrie der Bremshebel führen könnte, und welche bei kompaktem Aufbau und leichter Einbaubarkeit nur geringen Einbauraum und durch die Möglichkeit weitgehender Vormontierung nur wenige Abstütz- bzw. Befestigungsstellen am Fahrzeug- bzw. Drehgestellrahmen erfordert. Die den Bremsbacken abgewandten Enden der beiden äußeren Bremshebel sind dabei an der Kolbenstange bzw. dem Gehäuse eines Bremszylinders angelenkt, während die Enden der mittleren Bremshebel an Festpunkten angelenkt sind. Je nach Konstruktion des Bremszylinders kann es sich dabei ergeben, daß der Bremszylindertopf in eine seitlich relativ weit auskragende Lage zum Bremsgestänge gelangt, wodurch der Raumbedarf der Scheibenbremse ungünstig beeinflußt wird.

Es ist Aufgabe der Erfindung, eine Scheibenbremse der eingangs genannten Art, also speziell für drei Bremsscheiben, derart auszubilden, daß bei einfachem und weitgehend symmetrischem Aufbau sich äußerst geringer Platzbedarf ergibt, insbesondere seitlich der beiden seitlichen Bremshebel kein zusätzlicher Einbauraum benötigt wird. Im übrigen sollen die Vorteile der vorstehend beschriebenen, bekannten Scheibenbremse beibehalten werden.

Diese Aufgabe wird nach der Erfindung durch die Kombination der Merkmale gelöst, daß
- der Bremszylinder sich seitlich des mittleren Bereichs des Trägers befindet und mit seinem Gehäuse bzw. seiner Kolbenstange in Spreizrichtung wirkend an den Enden der der mittleren Bremsscheibe zugeordneten Bremshebel angelenkt ist,
- die am Träger zu diesem längsverschieblich geführten, mittleren Lagerstellen der beiden der mittleren Scheibenbremse zugeordneten Bremshebel über je eine Druckstange mit der ebenfalls längsverschieblich am Träger geführten, mittleren Lagerstelle des jeweils benachbarten, einer seitlichen Bremsscheibe zugeordneten Bremshebels verbunden ist,

- die Enden der jeweils einer seitlichen Bremsscheibe zugeordneten Bremshebel mittles jeweils einer Druckstange miteinander verbunden sind, deren wenigstens eine Druckstange in ihrer Länge justierbar ist und
- die mittleren Lagerstellen der beiden äußeren Bremshebel am Träger gelagert sind.

Nach der weiteren Erfindung vorteilhafte Ausbildungsmöglichkeiten einer derartigen Scheibenbremse sind den Merkmalen der Unteransprüche entnehmbar. Die gemäß Unteranspruch 7 mittels eines Handbremsgestänges verlängerbar auszubildende, seitliche Druckstange kann dabei zweckmäßig wie eine aus der DE-C 26 09 445, insbesondere aus Fig.15, bekannte Druckstange ausgebildet werden.

In der Zeichnung ist ein Ausführungsbeispiel für eine nach der Erfindung ausgebildete Scheibenbremse dargestellt, und zwar zeigt

Fig.1 eine Aufsicht und
Fig.2 eine teilweise Seitenansicht in jeweils rein schematischer Darstellung, sowie
Fig.3 eine Aufsicht,
Fig.4 eine Stirnansicht und
Fig.5 eine Seitenansicht in jeweils etwas detaillierterer Darstellung.

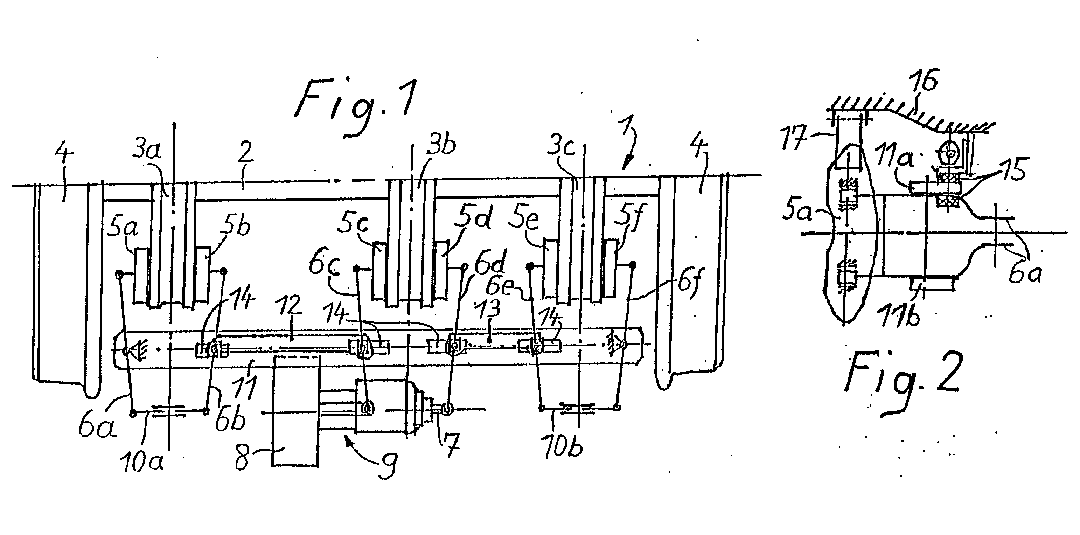

Die Zeichnungen zeigen einen Schienenfahrzeug-Radsatz 1 mit einer Radsatzwelle 2, auf welcher drei Bremsscheiben 3a, b und c angeordnet sind. Die beiden äußeren Bremsscheiben 3a und 3c befinden sich nahe der Räder 4 des Radsatzes 1, die mittlere Bremsscheibe 3b befindet sich etwas außermittig zwischen diesen beiden Bremsscheiben 3a und 3c etwas näher bei der rechts dargestellten Bremsscheibe 3c. Jeder Seite der Bremsscheiben 3a bis 3c ist jeweils eine Bremsbacke 5a bis 5f zugeordnet, jede Bremsbacke 5a bis 5f ist an einem Ende eines im wesentlichen radial zur Radsatzwelle 2 nach außen verlaufenden Bremshebels 6a bis 6f angelenkt. Die anderen Enden der beiden der mittleren Bremsscheibe 3b zugeordneten Bremshebel 6c und 6d sind am Gehäuse 8 bzw. der Kolbenstange 7 eines Bremszylinders 9 angelenkt. Der Bremszylinder 9 kann eine selbsttätige Spielnachstellvorrichtung und/oder eine Handbremseinrichtung üblicher Bauart aufweisen. Die äußeren Enden der jeweils beiden, den beiden äußeren Bremsscheiben 3a und 3c zugeordneten Bremshebel 6a und 6b bzw. 6e und 6f sind jeweils durch eine Druckstange 10a bzw. 10b miteinander verbunden, die Druckstangen 10a und 10b sind jeweils durch eine sicherbare Verschraubung in ihrer Länge justierbar. Die beiden äußeren Bremshebel 6a und 6f sind jeweils in ihrem mittleren Bereich an den Enden eines Trägers 11 drehbar gelagert. Der Träger 11 verläuft parallel zur Radsatzwelle 2 seitlich der Bremsscheiben 3a bis 3c zwischen den Rädern 4, er ist aus zwei vertikal im Abstand übereinander angeordneten, fest miteinander verbundenen Trägerteilen 11a und 11b gebildet. Die jeweils beiden Bremshebel 6b und 6c sowie 6d und 6e sind durch jeweils eine Druckstange 12 bzw. 13 in ihren mittleren Bereichen miteinander verbunden; im Anlenkbereich der Druckstangen 12 und 13 an die Bremshebel 6b bis 6e sind diese Bremshebel in sich in Längsrichtung des Trägers 11 erstreckenden Langlöchern 14 verschieblich geführt. Die Bremshebel 6a bis 6f sind, wie aus Fig.2 ersichtlich, als Doppelhebel mit zwei übereinander angeordneten, fest miteinander verbundenen Hebelteilen ausgebildet, die zwischen die beiden Trägerteile 11a und 11b eingreifen. Auch die Druckstangen 12 und 13 verlaufen zwischen den beiden Trägerteilen 11a und 11b. Der Träger 11 ist, wie ebenfalls aus Fig.2 ersichtlich, unter Zwischenordnen elastischer Zwischenelemente 15 gummielastisch mit dem Fahrzeug- bzw. Drehgestellrahmen 16 verbunden. Die Bremsbacken 5a bis 5f sind über Pendelhebel 17 in üblicher Weise am Fahrzeug- bzw. Drehgestellrahmen 16 aufgehängt. Aus Fig.1 ist ersichtlich, daß sich der Bremszylinder 9 seitlich des mittleren Bereiches des Trägers 11 befindet.

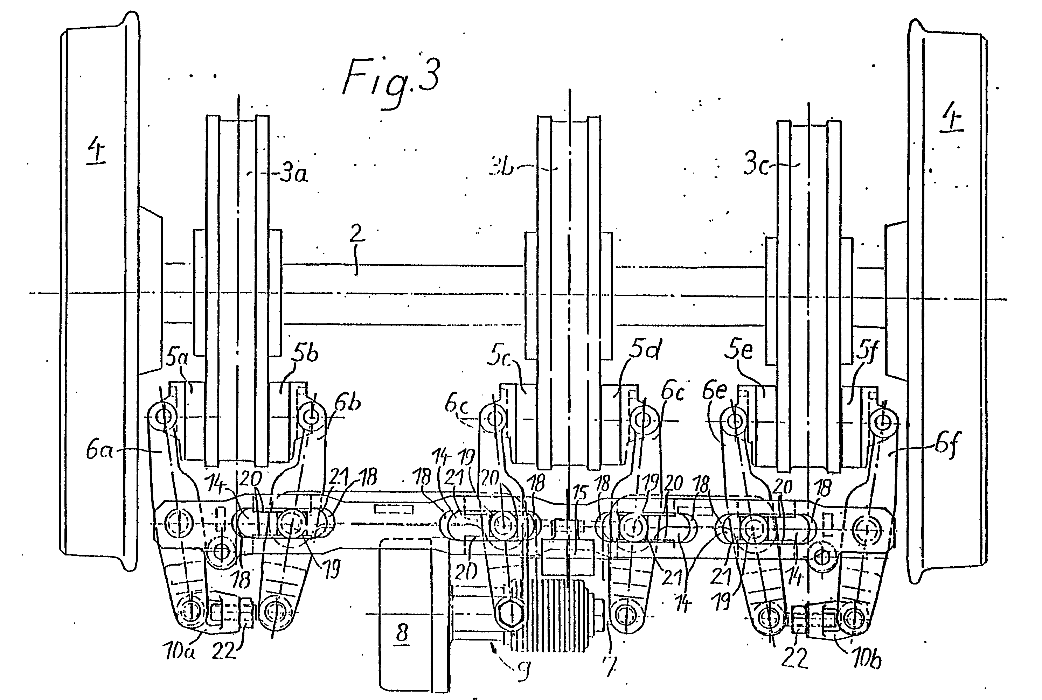

Insoweit ist der Aufbau der Scheibenbremse aus Fig.1 und 2 ersichtlich. In die Figuren 3 bis 5 sind den Figuren 1 und 2 entsprechende Bezugszahlen eingeschrieben. Aus diesen Figuren 3 bis 5 sind folgende, weitere Einzelheiten ersichtlich:

Die Langlöcher 14 sind stirnseitig durch schneidenartig abgeschrägt verlaufende Wandungen 18 begrenzt. Falls die Langlöcher 14 durch Eis, Schnee oder sonstige Verschmutzung zugesetzt sind, wird dieses Material beim Verschieben der Anlenkstellen 19 der Bremshebel 6b bis 6e in den Langlöchern 14 durch die abgeschrägten Wandungen 18 aus den Langlöchern 14 herausgedrückt und kann somit die Anlenkstellen 19 in den Langlöchern 14 nicht blockieren. Im weiteren sind die Langlöcher 14 seitlich mit Kunststoffgleitschienen 20 ausgestattet, an welchen den Anlenkstellen 19 zugehörende Gleitsteine 21 in den Langlöchern 14 verschieblich geführt sind. Die Kunststoffgleitschienen 20 gewährleisten eine reibungs- und verschleißarme Führung der Gleitsteine 21. Es kann zweckmäßig sein, die Gleitsteine 21 zumindest der beiden mittleren Bremshebel 6c und 6d an diesen in deren Längsrichtung justierbar anzuordnen. Dies kann beispielsweise in nicht dargestellter Weise dadurch erfolgen, daß die Bremshebel 6c und 6d in ihrer Längsrichtung verlaufende Langlöcher aufweisen, in welche Halterungselemente für die Gleitsteine 21 eingreifen; die jeweils freien Teile der erwähnten Langlöcher können durch Distanzstücke ausgefüllt werden, wodurch die justierte Lage der Gleitsteine 21 gesichert wird. Durch dieses Justieren ist ein Einstellen des jeweils erforderlichen Übersetzungsverhältnisses des Bremsgestänges für die Scheibenbremse möglich.

Das obere Trägerteil 11a weist nahe seiner beiden Enden und in seinem mittleren Bereich Halterungsstellen auf, an welchen es unter Zwischenlage platten- oder konushülsenförmiger, elastischer Zwischenelemente 15 am Fahrzeug- bzw. Drehgestellrahmen 16 anschraubbar ist. Der Träger 11 ist mit den Bremshebeln 6a bis f, den Bremsbacken 5a bis f, den Druckstangen 10a, 12 und 13 sowie dem Bremszylinder 9 weitgehend vormontierbar und kann in einfacher Weise als ganzes Bauteil am Fahrzeug- bzw. Drehgestellrahmen befestigt werden.

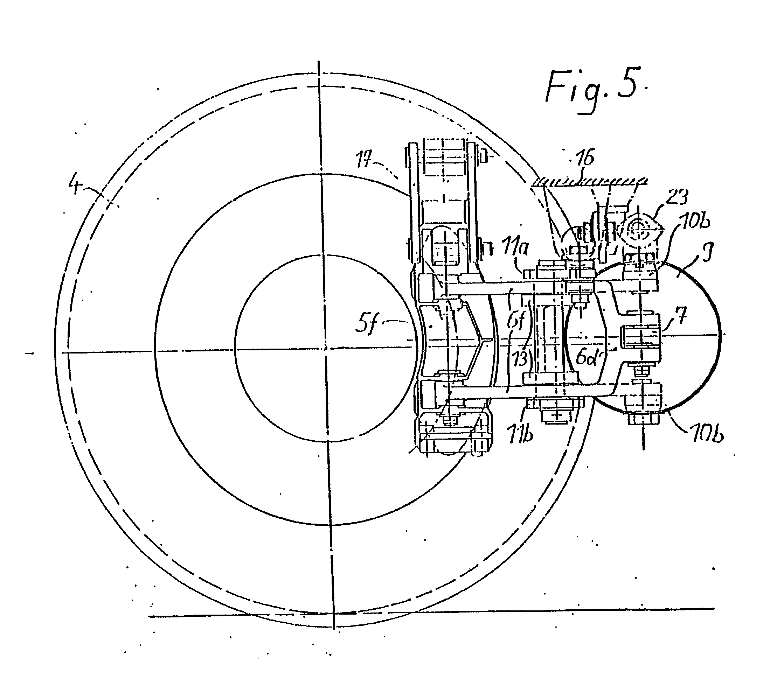

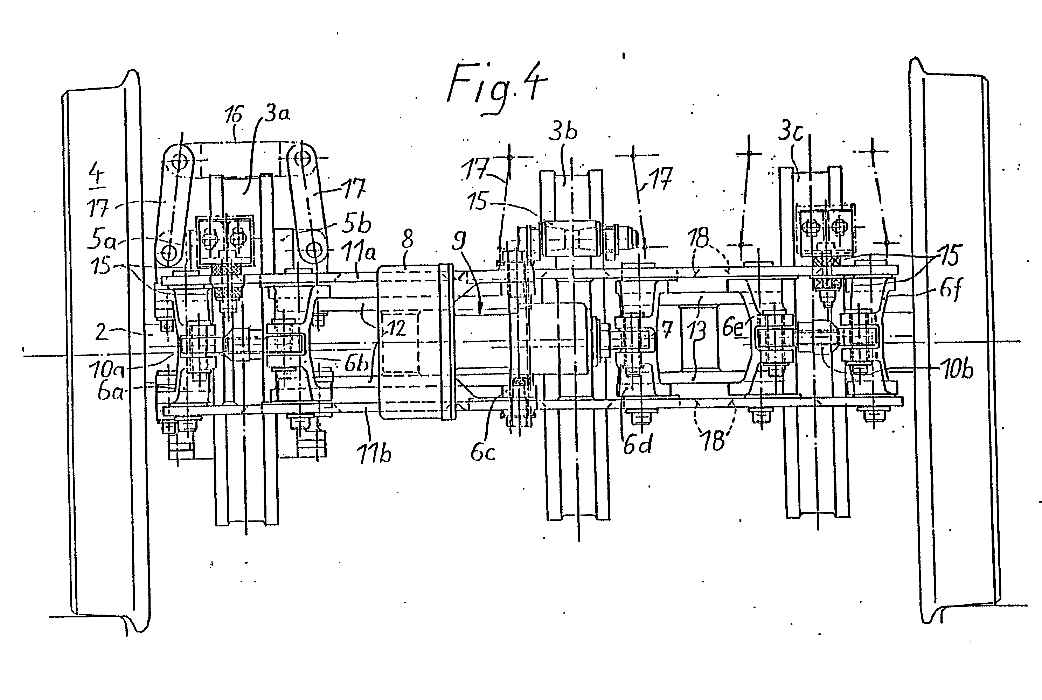

Die Druckstangen 10a und 10b sind gemäß Fig.3 und Fig.4 durch eine einfache, mittels einer Kontermutter 22 sicherbare Verschraubung in ihrer Länge justierbar. Abweichend können diese Druckstangen auch spannschloßartig ausgebildet werden, wie es in Fig.1 angedeutet ist. In weiterer Abänderung kann eine der Druckstangen, beispielsweise die Druckstange 10b, mittels eines Handbremsgestänges bei dessen Betätigung verlängerbar ausgebildet werden. Die Druckstange mit dem Handbremsgestänge kann dabei beispielsweise in der aus der eingangs genannten DE-C 26 09 445, insbesondere deren Fig.15 und folgende, oder in einer sonstigen, bekannten Weise ausgebildet werden. In Fig.5 ist eine derartige Handbremsbetätigung 23 strichpunktiert angedeutet.

### Bezugszeichenliste

1 Radsatz
2 Radsatzwelle
3a,b,c Bremsscheiben
4 Rad
5a-5f Bremsbacke
6a-6f Bremshebel
7 Kolbenstange
8 Gehäuse
9 Bremszylinder
10a,b Druckstange
11 Träger
11a,b Trägerteil
12 Druckstange
13 Druuckstange
14 Langloch
15 Zwischenelement
16 Fahrzeug- bzw. Drehgstellrahmen
17 Pendelhebel
18 Wandung
19 Anlenkstelle
20 Kunststoffgleitschiene
21 Gleitstein
22 Kontermutter
23 Handbrmesbetätigung

### Patentansprüche

1. Scheibenbremse für Schienenfahrzeuge, mit drei Bremsscheiben (3a, 3b, 3c) auf einer Radsatzwelle (2), wobei jeder Bremsscheibenseite das eine Bremsbacke (5a-5f) tragende Ende eines an seinem mittleren und an seinem anderen Endbereich Lagerstellen (19) zur Abstützung bzw. Bremskraftein- bzw. -ableitung aufweisenden Bremshebels (6a-6f) zugeordnet ist, wobei die Bremsbacken (5a-5f) mittels Pendelhebel (17) am Fahrzeug- bzw. Drehgestellrahmen (16) aufgehängt und die Bremshebel (6a-6f) an einem zur Radsatzwelle (2) parallel verlaufenden, am Fahrzeug- bzw. Drehgestell (16) gehaltenen Träger (11) gehalten bzw. geführt sind, und mit einem schwimmend gelagerten Bremszylinder (9), dessen Gehäuse (8) und Kolbenstange (7) an zwei Bremshebelenden angelenkt sind, gekennzeichnet durch die Kombination der Merkmale, daß
- der Bremszylinder (9) sich seitlich des mittleren Bereichs des Trägers (11) befindet und mit seinem Gehäuse (8) bzw. seiner Kolbenstange (7) in Spreizrichtung wirkend an den Enden der der mittleren Bremsscheibe (3b) zugeordneten Bremshebel (6c und 6d) angelenkt ist,
- die am Träger (11) zu diesem längsverschieblich geführten, mittleren Lagerstellen (19) der beiden der mittleren Bremsscheibe (3b) zugeordneten Bremshebel (6c und 6d) über je eine Druckstange (12,13) mit der ebenfalls längsverschieblich am Träger (11) geführten, mittleren Lagerstelle (19) des jeweils benachbarten, einer seitlichen Bremsscheibe (3a bzw. 3c) zugeordneten Bremshebels (6b bzw. 6e) verbunden ist,
- die Enden der jeweils einer seitlichen Bremsscheiben (3a, 3c) zugeordneten Bremshebel (6a und 6b bzw. 6e und 6f) mittels jeweils einer Druckstange (10a bzw. 10b) miteinander verbunden sind, deren wenigstens eine Druckstange (10a bzw. 10b) in ihrer Länge justierbar ist und
- die mittleren Lagerstellen der beiden äußeren Bremshebel (6a und 6f) am Träger (11) gelagert sind.

2. Scheibenbremse nach Anspruch 1, dadurch gekennzeichnet, daß der Träger (11) zwei vertikal übereinander verlaufende, fest miteinander verbundene Trägerteile (11a und 11b) aufweist, zwischen welchen die ebenfalls zwei vertikal übereinander verlaufende, fest miteinander verbundene Hebelteile aufweisenden Bremshebel (6a-6f) eingreifen, wobei jeweils das obere Hebelteil am oberen Trägerteil (11a) und das untere Hebelteil am unteren Trägerteil (11b) geführt bzw. angelenkt ist.

3. Scheibenbremse nach Anspruch 1 oder 2, dadurch gekennzeichnet, daß der Träger (11) unter Zwischenordnen von elastischen Zwischenelementen (15) gummielastisch mit dem Fahrzeug- bzw. Drehgestellrahmen (16) verschraubt ist.

4. Scheibenbremse nach Anspruch 1, 2 oder 3, dadurch gekennzeichnet, daß die Bremshebel (6b-6e) mittels in Langlöcher (14) des Trägers (11) eingreifenden Führungselementen am Träger (11) geführt sind und daß die Langlöcher (14) an ihren Enden durch schneidenartig abgeschrägte Wandungen (18) begrenzt sind.

5. Scheibenbremse nach Anspruch 4, dadurch gekennzeichnet, daß die Langlöcher (14) mit Kunststoffgleitschienen (20) ausgekleidet sind, an welchen die als Gleitsteine (21) ausgebildeten Führungselemente verschieblich geführt sind.

6. Scheibenbremse nach einem oder mehreren der vorstehenden Ansprüche, dadurch gekennzeichnet, daß die Anlenkstellen zumindest der beiden mittleren Druckstangen (12 und 13) in Längsrichtung der Bremshebel (6b-6e) justierbar an diesen Bremshebeln (6b-6e) angeordnet sind.

7. Scheibenbremse nach einem oder mehreren der vorstehenden Ansprüche, dadurch gekennzeichnet, daß eine der seitlichen Druckstangen (10b) mittels eines Handbremsgestänges (23) bei dessen Betätigung sich verlängert ausgebildet ist.

## Claims

1. Disc brake for railway vehicles, comprising three brake discs (3a, 3b, 3c) on a wheelset axle (2), each brake disc side being assigned the end – that carries a brake shoe (5a–5f) – of a brake lever (6a–6f) having in its centre area and its other end area bearing points (19) providing support and serving to apply and divert braking force, and the brake shoes (5a–5f) being suspended by swinging levers (17) from the vehicle or bogie frame (16) and the brake levers (6a–6f) being supported and guided by a carrier (11) which is parallel to the wheelset axle (2) and held by the vehicle or bogie frame (16), and comprising a floating brake cylinder (9) whose body (8) and piston rod (7) are articulated to two brake lever ends, characterized by a combination of features wherein
– the brake cylinder (9) is located at one side of the centre area of the carrier (11) and is articulated, so as to act in the direction of expansion, by its body (8) and its piston rod (7) to the ends of the brake levers (6c and 6d) assigned to the centre brake disc (3b),
– the centre bearing points (19), which are longitudinally displaceable on the carrier (11) and which belong to the two brake levers (6c and 6d) assigned to the centre brake disc (3b), are linked via one thrust rod each (12, 13) to the centre bearing point (19) which is also longitudinally displaceable on the carrier (11) and which belongs to the respectively adjacent brake levers (6b and 6e) assigned to the respective side brake discs (3a and 3c).
– the ends of the brake levers (6a, 6b and 6e, 6f) assigned respectively to the side brake discs (3a, 3c) are linket together through one thrust rod each (10a and 10b), at least one of which rods (10a and/or 10b) is of adjustable length and
– the centre bearing points of the two outer brake levers (6a and 6f) are mounted on the carrier (11).

2. Disc brake as defined in Claim 1, wherein the carrier (11) has two carrier members (11a and 11b) which extend vertically above one another and are connected firmly together, between which carrier members reach the brake levers (6a–6f) having lever members which also extend vertically above one another and are connected firmly together, the upper lever member being guided by and articulated to the upper carrier member (11a) and the lower lever member being guided by and articulated to the lower carrier member (11b).

3. Disc brake as defined in Claim 1 or 2, wherein the carrier (11) is screwed to the vehicle or bogie frame (16) by flexible rubber means using flexible intermediate elements (15).

4. Disc brake as defined in Claim 1, 2 or 3, wherein the brake levers (6b–6e) are guided on the carrier (11) by guide elements engaging oblong holes (14) in the carier (11) and wherein the oblong holes (14) are limited at their ends by walls (18) bevelled like blades.

5. Disc brake as defined in Claim 4, wherein the oblong holes (14) are lined with plastic slides (20) on which the guide elements designed as sliding blocks (21) are able to run.

6. Disc brake as defined in one or more of the preceding claims, wherein the articulation points of at least the two centre thrust rods (12 and 13) are ar-

4

ranged adjustably on the brake levers (6b–6e) in the longitudinal direction of these levers.

7. Disc brake as defined in one or more of the preceding claims, wherein one of the side thrust rods (10b) is designed so as to lengthen by means of a handbrake linkage (23) when the latter is actuated.

## Revendications

1. Frein à disques pour véhicules ferroviaires, comprenant trois disques de frein (3a, 3b, 3c) fixés sur un essieu monté (2), à chaque face de ces disques étant appliquée une mâchoire de frein (5a–5f) fixée à l'extrémité d'un levier de frein (6a–6f) muni à son autre extrémité et au milieu d'organes (19) servant à son appui ou à la transmission de l'effort de freinage, les mâchoires de frein (5a–5f) étant attachées par un levier articulé (17) au châssis du véhicule ou du bogie (16), et les leviers de frein (6a–6f) étant fixés à un support (11) respectivement guidé par ce support parallèle à l'essieu (2) et solidaire du véhicule ou du bogie (16), frein à disques comprenant un cylindre de frein (9) flottant sur le corps (8) duquel et la tige de piston (7) sont articulées les extrémités de deux leviers de frein, caractérisé par ce que
   – le cylindre de frein (9) se trouve décalé par rapport à la partie centrale du support (11), son corps (8) et sa tige de piston (7) produisant un effet d'écartement, étant articulés aux extrémités des leviers de frein (6c et 6d) portant les mâchoires pour le disque central (3b),
   – les organes de guidage (19) coulissant longitudinalement dans le support (11) et portant les deux leviers de frein (6c et 6d) du disque moyen (3b), sont reliés par une barre (12 ou 13) aux organes de guidage (19) coulissant aussi longitudinalement dans le support (11) et portant les leviers de frein (6b et 6e) des disques voisins (3a et 3c),
   – les extrémités des leviers de frein (6a et 6b ou 6e et 6f) des disques extérieurs (3a, 3c) sont reliées entre elles par une barre (10a ou 10b) dont au moins une (10a ou 10b) est réglable en longueur,
   – les organes d'appui des deux leviers de frein extérieurs (6a et 6f) sont fixés sur le support (11).

2. Frein à disques suivant la revendication 1, caractérisé par le fait que le support (11) se compose de deux éléments (11a et 11b) solidaires l'un de l'autre et disposés à la verticale l'un au-dessus de l'autre, entre lesquels sont logés les leviers de frein (6a–6f) se composant de deux bras solidaires l'un de l'autre et disposés également à la verticale l'un au-dessus de l'autre, le bras supérieur étant conduit par ou articulé à l'élément supérieur (11a) du support et le bras inférieur coopérant avec l'élément inférieur (11b).

3. Frein à disques suivant la revendication 1 ou 2, caractérisé par le fait que le support (11) est boulonné sur le châssis (16) du véhicule ou du bogie avec interposition d'éléments élastiques en caoutchouc (15).

4. Frein à disques suivant la revendication 1, 2 ou 3, caractérisé par le fait que les leviers de frein (6b–6e) sont guidés par des organes coulissant dans des trous oblongs (14) du support (11), et que les trous oblongs (14) sont munis à leurs extrémités de parois (18) isocèles.

5. Frein à disques suivant la revendication 4, caractérisé par le fait que les trous oblongs (14) sont munis de revêtements plastiques (20) guidant les organes de guidage en forme de coulisseaux (21).

6. Frein à disques suivant l'une ou plusieurs des revendications énumérées précédemment, caractérisé par le fait que les articulations au moins des deux barres (12 et 13) sur les leviers de frein (6b–6e) peuvent être réglées par déplacement le long desdits leviers.

7. Frein à disques suivant l'une ou plusieurs des revendications énumérées précédemment, caractérisé par le fait que l'une des barres (10b) peut être allongée par l'action d'un tringlage (23) commandée manuellement.

Fig. 1

Fig. 2

Fig.3

Fig. 5.

EP 0 296 351 B1

Fig.4

EP 0 296 351 B1